# EUROPEAN PATENT APPLICATION

(11) **EP 4 761 255 A1**
(43) Date of publication of application: **17.06.2026**
(21) Application number: 24856556.6
(22) Date of filing: 15.01.2024
(51) Int. Cl.: H04N 21/81, H04N 21/488

(54) **DISPLAY DEVICE AND OPERATING METHOD THEREOF**

(30) Priority: 23.08.2023 KR 20230110710
(71) Applicant: LG Electronics Inc., Yeongdeungpo-gu Seoul 07336 (KR)
(72) Inventor: KIM, Yu Nam, Seoul 06772 (KR); KANG, Sin An, Seoul 06772 (KR)
(74) Representative: Schott, Jakob Valentin
(86) International application number: PCT/KR2024/000725
(87) International publication number: WO 2025/041935

(57) **Abstract**

A display device and an operating method thereof are disclosed. The display device according to an embodiment of the present invention comprises a display, determines whether a power mode of the display device is standby mode and, if the power mode is the standby mode, can sequentially display a plurality of information boards including different types of information on the display in a slide show.

## Description

### [Technical Field]

The present disclosure relates to a display device that sequentially displays various information in standby mode.

### [Background Art]

Digital TV services using wired or wireless communication networks are becoming widespread. Digital TV services can provide a variety of services not available with existing analog broadcasting services.

For example, Internet Protocol Television (IPTV) and smart TV services, which are types of digital TV services, provide interactivity, allowing users to actively select the type of program to watch and the viewing time. Based on this interactivity, IPTV and smart TV services can also provide various additional services, such as Internet search, home shopping, and online games.

Previously, screen configurations provided in standby mode (Always Ready) were often focused on aesthetics, such as art exhibitions, and thus often lacked the ability to provide helpful information to users.

In particular, existing standby modes only provide moving images or clock screens with no significant information.

### [Disclosure of the Invention]

### [Technical Problem]

The present disclosure aims to sequentially display various types of information while applying a motion effect to a background image to prevent afterimages in an organic light-emitting diode display device.

The present disclosure aims to sequentially provide various types of information in standby mode, thereby preventing afterimages in an organic light-emitting diode display device and simultaneously providing useful information directly to a user.

### [Technical Solution]

A display device according to an embodiment of the present disclosure may comprise a display and a controller that determines whether a display and a power mode of the display device are in standby mode, and when the power mode is in standby mode, sequentially displays a plurality of information boards including different types of information on the display in a slideshow format.

A method for operating a display device according to an embodiment of the present disclosure may include the steps of determining whether a power mode of the display device is a standby mode and, when the power mode is the standby mode, sequentially displaying a plurality of information boards including different types of information in a slideshow format.

### [Effects of the Invention]

The present disclosure aims to prevent afterimages in a display device by sequentially displaying various types of information on a standby screen.

The present disclosure aims to prevent afterimages in an organic light-emitting diode display device while simultaneously providing useful information directly to a user.

### [Brief Description of Drawings]

FIG. 1 is a block diagram illustrating the configuration of a display device according to an embodiment of the present disclosure.
FIG. 2 is a flowchart illustrating an operating method of a display device according to an embodiment of the present disclosure.
FIGS. 3a to 3e are diagrams illustrating information boards according to an embodiment of the present disclosure.
FIG. 4 is a diagram illustrating a process of changing a background screen displayed with an information board according to an embodiment of the present disclosure.
FIG. 5 is a block diagram illustrating a configuration of a controller according to an embodiment of the present disclosure.
FIG. 6 is a diagram illustrating a home appliance displayed with the highest priority on an event board based on weather information according to an embodiment of the present disclosure.

### [Best Mode]

Hereinafter, embodiments related to the present invention will be described in more detail with reference to the drawings. The suffixes "module" and "unit" used in the following description for components are assigned or used interchangeably solely for the convenience of writing the specification, and do not inherently have distinct meanings or roles.

A display device according to an embodiment of the present invention is, for example, an intelligent display device that adds computer-assisted functionality to a broadcast reception function. While faithfully performing the broadcast reception function, it can also be equipped with Internet functionality and other features, providing a more user-friendly interface such as a handwritten input device, a touch screen, or a space remote control. Furthermore, with wired or wireless Internet support, it can connect to the Internet and a computer, enabling functions such as email, web browsing, banking, or gaming. A standardized, general-purpose operating system (OS) can be used for these various functions.

Therefore, the display device described in the present invention can perform various user-friendly functions, for example, by allowing various applications to be freely added or removed from a general-purpose OS kernel. The display device may be, more specifically, a network TV, HBB TV, smart TV, LED TV, OLED TV, etc., and may also be applied to a smartphone in some cases.

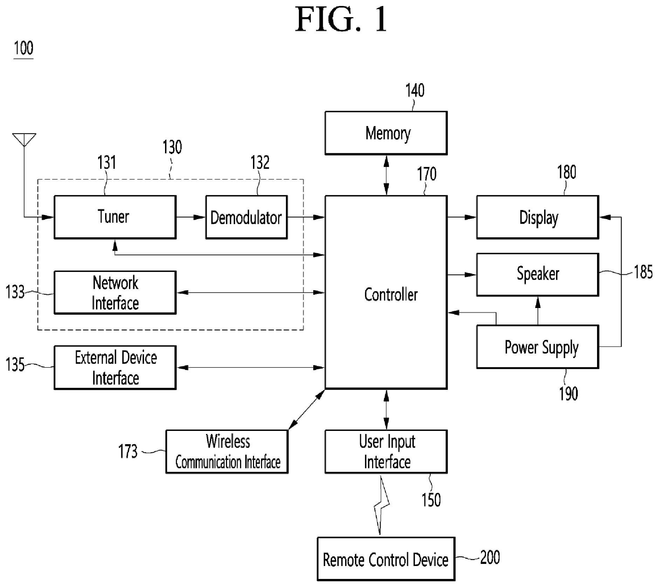

FIG. 1 is a block diagram illustrating the configuration of a display device according to an embodiment of the present invention.

Referring to FIG. 1, the display device 100 may include a broadcast receiver 130, an external device interface 135, a memory 140, a user input interface 150, a controller 170, a wireless communication interface 173, a display 180, a speaker 185, and a power supply circuit 190.

The broadcast receiver 130 may include a tuner 131, a demodulator 132, and a network interface 133.

The tuner 131 may select a specific broadcast channel in response to a channel selection command. The tuner 131 can receive a broadcast signal for a specific broadcast channel that has been selected.

The demodulator 132 can separate the received broadcast signal into a video signal, an audio signal, and a data signal related to the broadcast program, and can restore the separated video signal, audio signal, and data signal into an outputtable form.

The external device interface 135 can receive an application or an application list within an adjacent external device and transmit the application to the controller 170 or memory 140.

The external device interface 135 can provide a connection path between the display device 100 and the external device. The external device interface 135 can receive one or more of video and audio output from an external device connected wirelessly or wired to the display device 100 and transmit the received image and audio to the controller 170. The external device interface 135 can include a plurality of external input terminals. The multiple external input terminals may include an RGB terminal, one or more High Definition Multimedia Interface (HDMI) terminals, and a component terminal.

A video signal from an external device input through the external device interface 135 may be output through the display 180. An audio signal from an external device input through the external device interface 135 may be output through the speaker 185.

An external device connectable to the external device interface 135 may be any one of a set-top box, a Blu-ray player, a DVD player, a game console, a sound bar, a smartphone, a PC, a USB memory, and a home theater, but these are merely examples.

The network interface 133 may provide an interface for connecting the display device 100 to a wired/wireless network, including the Internet. The network interface 133 may transmit or receive data with other users or other electronic devices through the connected network or another network linked to the connected network.

In addition, some content data stored in the display device 100 can be transmitted to another user or another electronic device pre-registered in the display device 100.

The network interface 133 can access a predetermined web page via the connected network or another network linked to the connected network. That is, the network interface 133 can access a predetermined web page via the network and transmit or receive data to or from the corresponding server.

In addition, the network interface 133 can receive content or data provided by a content provider or network operator. That is, the network interface 133 can receive content such as movies, advertisements, games, VOD, broadcast signals, and other related information provided by the content provider or network provider via the network.

In addition, the network interface 133 can receive firmware update information and update files provided by the network operator, and can transmit data to the Internet, the content provider, or the network operator.

The network interface 133 can select and receive a desired application from among applications open to the public via a network.

The memory 140 stores programs for signal processing and control within the controller 170, and can store processed video, audio, or data signals.

In addition, the memory 140 can perform a function for temporarily storing video, audio, or data signals input from the external device interface 135 or the network interface 133, and can also store information about a specific image through a channel memory function.

The memory 140 can store an application or a list of applications input from the external device interface 135 or the network interface 133.

The display device 100 can reproduce content files (video files, still image files, music files, document files, application files, etc.) stored in the memory 140 and provide them to the user.

The user input interface 150 can transmit a signal input by the user to the controller 170 or transmit a signal from the controller 170 to the user. For example, the user input interface 150 can receive and process control signals such as power on/off, channel selection, and screen settings from the remote control device 200 according to various communication methods such as Bluetooth, Ultra Wideband (WB), ZigBee, Radio Frequency (RF) communication, or infrared (IR) communication, or process control signals from the controller 170 to be transmitted to the remote control device 200.

In addition, the user input interface 150 can transmit control signals input from local keys (not shown) such as a power key, a channel key, a volume key, and a setting value to the controller 170.

The image signal processed by the controller 170 can be input to the display 180 and displayed as an image corresponding to the image signal. Furthermore, the image signal processed by the controller 170 can be input to an external output device via the external device interface 135.

The audio signal processed by the controller 170 can be output as audio to the speaker 185. Furthermore, the audio signal processed by the controller 170 can be input to an external output device via the external device interface 135.

In addition, the controller 170 can control the overall operation of the display device 100.

Furthermore, the controller 170 can control the display device 100 via user commands input via the user input interface 150 or internal programs, and can connect to a network to allow the user to download desired applications or application lists onto the display device 100.

The controller 170 enables the user-selected channel information and other processed video or audio signals to be output through the display 180 or speaker 185.

In addition, the controller 170 enables a video signal or audio signal from an external device, for example, a camera or camcorder, input through the external device interface 135 to be output through the display 180 or speaker 185 in response to an external device video playback command received through the user input interface 150.

Meanwhile, the controller 170 can control the display 180 to display an image. For example, the controller 170 can control the display 180 to display a broadcast image input through the tuner 131, an external input image input through the external device interface 135, an image input through the network interface, or an image stored in the memory 140. In this case, the image displayed on the display 180 may be a still image or a moving image, and may be a 2D image or a 3D image.

In addition, the controller 170 may control the playback of content stored in the display device 100, received broadcast content, or external input content input from the outside. The content may be in various forms, such as broadcast images, external input images, audio files, still images, connected web screens, and document files.

The wireless communication interface 173 can communicate with an external device through wired or wireless communication. The wireless communication interface 173 can perform short-range communication with the external device. To this end, the wireless communication interface 173 can support short-range communication using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (Wireless USB) technologies. This wireless communication interface 173 can support wireless communication between the display device 100 and a wireless communication system, between the display device 100 and another display device 100, or between the display device 100 and a network where the display device (100, or an external server) is located via a wireless area network (WLAN). The WLAN may be a wireless personal area network (WPC).

Here, the other display device 100 may be a wearable device (e.g., a smartwatch, smart glasses, or a head-mounted display (HMD)) capable of exchanging data with (or linking with) the display device 100 according to the present invention, or a mobile terminal such as a smart phone. The wireless communication interface 173 can detect (or recognize) a wearable device capable of communication around the display device 100.

Furthermore, if the detected wearable device is a device certified to communicate with the display device 100 according to the present invention, the controller 170 may transmit at least a portion of the data processed by the display device 100 to the wearable device via the wireless communication interface 173. Accordingly, the user of the wearable device may utilize the data processed by the display device 100 through the wearable device.

The display 180 may convert the image signal, data signal, OSD signal processed by the controller 170, or the image signal, data signal, etc. received from the external device interface 135 into R, G, and B signals, respectively, to generate a driving signal.

Meanwhile, the display device 100 illustrated in FIG. 1 is merely an embodiment of the present invention. Therefore, some of the illustrated components may be integrated, added, or omitted depending on the specifications of the display device 100 actually implemented.

That is, two or more components may be combined into one component, or one component may be subdivided into two or more components, as needed. In addition, the functions performed by each block are for explaining embodiments of the present invention, and the specific operations or devices thereof do not limit the scope of the present invention.

According to another embodiment of the present invention, unlike as illustrated in FIG. 1, the display device 100 may receive and play back images through a network interface 133 or an external device interface 135 without a tuner 131 and a demodulator 132.

For example, the display device 100 may be implemented separately as an image processing device, such as a set-top box, for receiving broadcast signals or content according to various network services, and a content playback device for playing back content input from the image processing device.

In this case, the operating method of the display device according to the embodiment of the present invention described below may be performed not only by the display device 100 described with reference to FIG. 1, but also by any one of an image processing device such as the separate set-top box or a content playback device including a display 180 and a speaker 185.

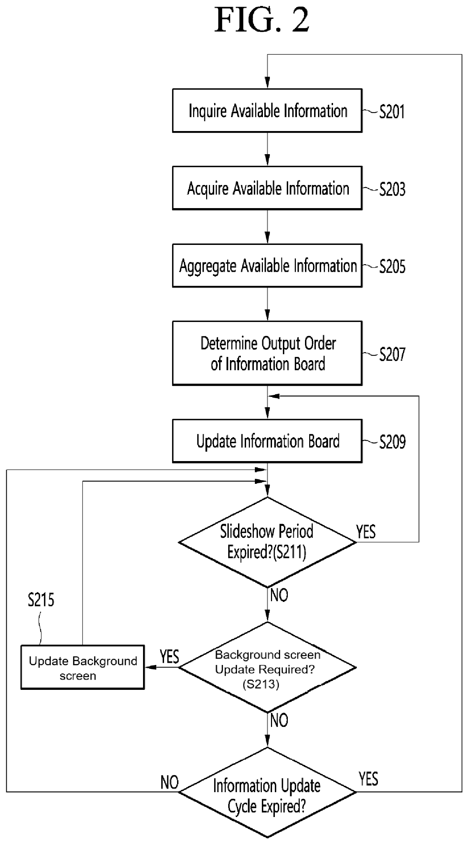

FIG. 2 is a flowchart illustrating the operating method of the display device according to one embodiment of the present disclosure.

The power mode of the display device 100 may include a standby mode and a normal mode. The standby mode may be a mode for driving the display device 100 with minimal power consumption. Under the standby mode, the power supply circuit 190 may supply power only to some components of the display device 100.

The normal mode may be a mode in which the power supply circuit 190 supplies power to all components of the display device 100 more than in the standby mode.

In standby mode, a standby screen may be displayed on the display 180. The standby screen may include an information board and a background screen, which will be described later.

The display 180 may be an organic light emitting diode (OLED) display. The display 180 may include a plurality of pixels and an OLED driving circuit for driving an OLED included in each pixel.

The controller 170 may determine whether the power mode of the display device 100 is the standby mode, and if the power mode is determined to be the standby mode, the controller 170 may perform the following steps.

Referring to FIG. 2, the controller 170 of the display device 100 may query available information (S201).

In one embodiment, the available information may include one or more of weather information, calendar information, game information of a preferred sports team or athlete, information about home appliances, and viewing schedule information.

The controller 170 may query available information through one or more external servers. The controller 170 may request whether updated information exists on one or more external servers.

The controller 170 may acquire available information based on the inquiry result (S203).

The controller 170 may receive weather information from a weather server (not shown) via the network interface 133. The weather information may include current weather and forecast information.

The controller 170 may receive game information of a preferred sports team from a search server (not shown) via the network interface 133. The user's preferred sports teams or athletes may be pre-stored in the memory 140 or the search server.

The controller 170 can receive information about home appliances installed in the home from an Internet of Things (IoT) server (not shown) via a network interface 133. A display device 100 and one or more home appliances may be installed in the home.

The information about the home appliances may include one or more of information about the operating status of the home appliances and information about their power status.

The controller 170 can obtain viewing schedule information from a broadcast server (not shown) or memory 140. The viewing schedule information may include one or more of the name of a broadcast program for which a user has reserved viewing and the broadcast time of the broadcast program.

The controller 170 can aggregate the acquired available information (S205) and determine the output order of the information boards based on the aggregation results (S207).

The controller 170 can determine the output order of the multiple information boards based on the aggregated available information.

The information board may include one or more of weather information, calendar information, game information of a preferred sports team or athlete, and event information. The event information may include one or more of home appliance information or scheduled viewing information.

The information board may include any one of a weather board including weather information, a calendar board including calendar information, a sports board including game information of a preferred sports team or athlete, an event board including event information, and a comprehensive board including weather information, game information of a preferred sports team or athlete, and event information.

In one embodiment, the controller (170) may determine an output order of information boards according to an update order of information. The controller (170) may assign a higher priority to information having an earlier update time.

The controller 170 may determine the output order of five information boards. The five information boards may be sequentially displayed on the display 180 according to the determined output order.

In another embodiment, the controller 170 may determine the output order of information boards according to a set order based on user input.

The controller 170 may update the information boards according to the determined output order of the information boards (S209).

The controller 170 may sequentially display the information boards on the display 180 in a slide show format. Each information board may be displayed for a preset slide show period. The preset slide show period may be one minute, but this is merely an example and may vary depending on user settings or be set as a default.

When the slide show period of the first information board has elapsed while the controller 170 is displaying the first information board, the controller 170 may update the first information board with a second information board.

Meanwhile, the controller 170 may display a standby screen including the information boards and a background screen on the display 180 in standby mode. The information board can be displayed overlapping the background screen.

The controller 170 can determine whether the slideshow period has expired while displaying the updated information board (S211).

If the controller 170 determines that the slideshow period has expired, the controller 170 can update the information board (S209).

If the controller 170 determines that the slideshow period has not expired, the controller 170 can determine whether the background screen needs to be updated (S213).

The controller 170 can display a standby screen including the information board and the background screen on the display 180. The background screen may be a screen including a background image.

If the slideshow period has not expired, the controller 170 can calculate the display period of the background screen and determine whether the background screen needs to be updated based on the calculated display period.

The display period of the background screen may also be a preset period. The display period of the background screen may be longer than the slide show period of the information board.

Even if the slide show period of the information board has not expired, if the display period of the background screen is determined to have elapsed, the controller 170 may determine that the background screen needs to be updated.

If the controller 170 determines that the background screen needs to be updated, the controller 170 may update the background screen (S215). Thereafter, the controller 170 may perform step S211.

If the controller 170 determines that the background screen needs to be updated, the controller 170 may update the existing background screen with a new background screen.

If the controller 170 determines that updating the background screen is unnecessary, the controller 170 may determine whether the update cycle of the information provided through the information board has expired (S217).

If the controller 170 determines that updating the background screen is unnecessary, it can determine whether the update cycle of the information provided through the currently displayed information board has elapsed.

The information update cycle may be the same or different for each piece of information.

If the controller 170 determines that the information update cycle has expired, it can re-perform the available information search step (S201).

If the controller 170 determines that the information update cycle has expired, it can re-search the available information to add new information provided through the information board.

If the controller 170 determines that the information update cycle has not expired, it can perform the step (S211) of determining whether the slide show period has expired.

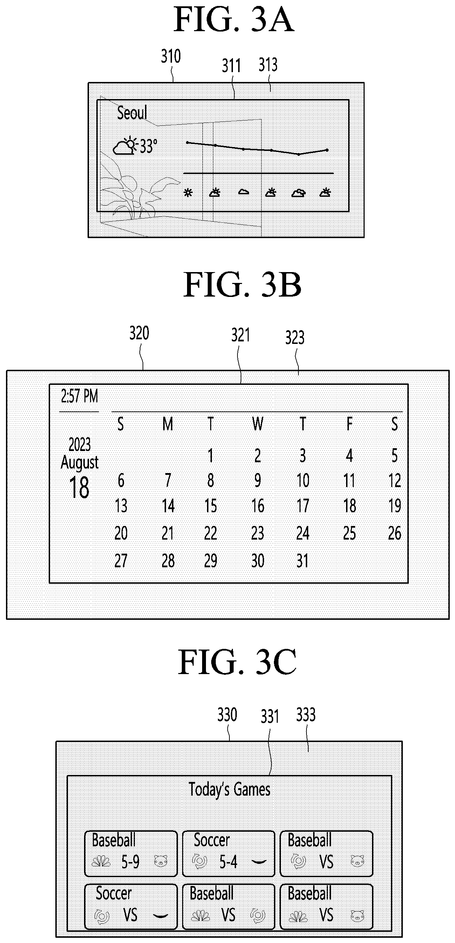

FIGS. 3a to 3e are diagrams illustrating information boards according to an embodiment of the present disclosure.

FIGS. 3a to 3e are examples of standby screens displayed when the power mode of the display device 100 is in standby mode.

Referring to FIG. 3a, the first standby screen 310 may include a weather board 311 and a background screen 313.

The weather board 311 may be a board containing weather information. The weather information may include one or more of the current weather or future weather.

The update cycle of the weather information may be one hour, but this is merely an example and is not limited thereto.

Referring to FIG. 3b, the second standby screen 320 may include a calendar board 321 and a background screen 323.

The calendar board 321 may be a board containing calendar information. The calendar information may include information about a calendar corresponding to the current time. The calendar information may include schedule information of a user's terminal linked to the display device 100.

Whenever schedule information is input into the terminal, the input schedule information may be reflected in the calendar information.

The calendar information may be updated whenever the user's terminal is linked.

The update point for the calendar information may be the time when the schedule information is received from the terminal or the time when the terminal is linked.

As another example, the calendar information may also be updated at regular intervals.

Referring to FIG. 3c, the third standby screen 330 may include a sports board 331 and a background screen 333.

The sports board 331 may include one or more of match information of a user's preferred sports team or match information of a user's preferred sports player.

The update cycle of the sports board 331 may be 10 minutes, but this is merely an example and is not limited thereto.

Meanwhile, the controller 170 may prioritize displaying game information of highly relevant sports events on the sports board based on weather information.

For example, if the current weather is rainy or snowy, the controller 170 may consider the possibility of outdoor sports being canceled and display game information of indoor sports events preferred by the user on the sports board 331.

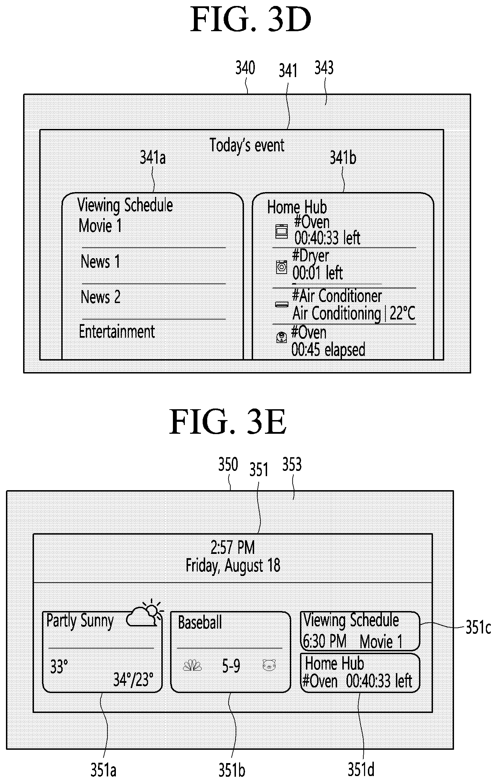

Referring to FIG. 3d, the fourth standby screen 340 may include an event board 341 and a background screen 343.

The event board 341 may include a viewing reservation board 341a and a home appliance board 341b.

The viewing reservation board 341a may include information on multiple broadcast contents reserved for viewing by a user. The viewing reservation board 341a may include the viewing reservation time and the name of the broadcast contents.

The home appliance board 341b may include the operating status of multiple home appliances linked to the display device 100. The operating status of the home appliances may include at least one of the operating execution time and the scheduled operation termination time of the home appliances.

The controller 170 may display, among the multiple home appliances, the home appliance most closely associated with the weather information contained in the weather board 311 at the top of the list.

For example, if the weather is currently rainy, the controller 170 may display information on the operating status of a dehumidifier at the top of the home appliance board 341b.

The event board 341 may be updated in real time or at one-minute intervals.

Referring to FIG. 3e, the fifth standby screen 350 may include a comprehensive board 351 and a background screen 353.

The comprehensive board 351 may include information in a summarized state of each information board.

The comprehensive board 351 may include weather summary information 351a, game summary information 351b, viewing reservation summary information 351c, and home appliance summary information 351d.

The update cycle of the comprehensive board 351 may be the cycle of the shortest information among the pieces of information.

The comprehensive board 351 may be updated when any one of the following information is updated: weather summary information 351a, game summary information 351b, viewing reservation summary information 351c, and home appliance summary information 351d.

The weather summary information 351a may include current weather information from among the information included in the weather board 313.

The game summary information 351b may include information on a currently ongoing game from among the games included in the sports board 331.

The viewing reservation summary information 351c may include reservation information for the content that has been reserved for viewing closest to the current time from among the multiple contents included in the viewing reservation board 341a.

The home appliance summary information 351d may include information about the home appliance most closely related to current weather information among the multiple home appliances included in the home appliance board 341b.

For example, if the weather is currently rainy, the controller 170 may display information about the operating status of a dehumidifier in the home appliance summary information 351d.

The controller 170 of the display device 100 may sequentially display the first standby screen 310 to the fifth standby screen 350 on the display 180.

The controller 170 may display the first standby screen 310 to the fifth standby screen 350 on the display 180 at slide show intervals.

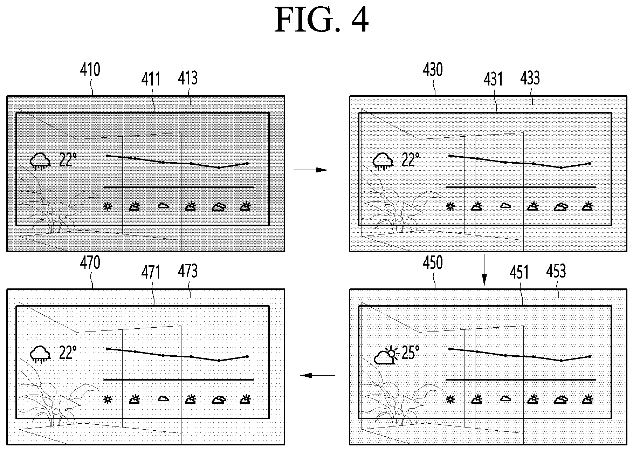

FIG. 4 is a diagram illustrating a process of changing a background screen displayed together with an information board according to an embodiment of the present disclosure.

FIG. 4 is a diagram illustrating how the background screen changes according to the time zone in the standby mode of the display device 100.

The controller 170 can automatically change the background screen included in the standby screen according to the time zone in the standby mode.

The controller 170 can control the display 180 to display a background screen matching the time zone.

The first standby screen 410 can include a first weather board 411 and a first background screen 413. The first standby screen 410 can be a screen displayed on the display 180 from 9:00 PM to 3:00 AM.

The second standby screen 430 can include a second weather board 431 and a second background screen 433. The second standby screen 430 may be a screen displayed on the display 180 from 3:00 AM to 8:00 AM. The brightness of the second background screen 433 may be greater than that of the first background screen 413.

The third standby screen 450 may include a third weather board 451 and a third background screen 453. The third standby screen 450 may be a screen displayed on the display 180 from 8:00 AM to 3:00 PM. The brightness of the third background screen 453 may be greater than that of the second background screen 433.

The fourth standby screen 470 may include a fourth weather board 451 and a third background screen 453. The fourth standby screen 470 may be a screen displayed on the display 180 from 3:00 PM to 9:00 PM. The brightness of the fourth background screen 473 may be greater than the brightness of the third background screen 453.

According to the embodiment of FIG. 4, afterimages on the display 180 may be prevented by automatically switching the background screen according to the time zone.

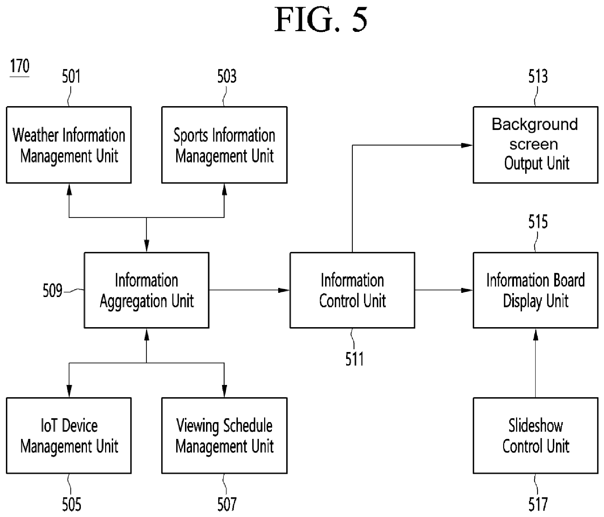

FIG. 5 is a block diagram illustrating the configuration of a controller according to an embodiment of the present disclosure.

The controller 170 may include a weather information management unit 501, a sports information management unit 503, an IoT device information management unit 505, a viewing reservation management unit 507, an information collection unit 509, an information control unit 511, a background screen output unit 513, an information board output unit 515, and a slide show control unit 517.

The weather information management unit 501 may obtain weather information. The weather information may include one or more of current weather and forecast information.

The sports information management unit 503 can obtain game information of a user's preferred sports team or game information of a user's preferred sports player.

The IoT device information management unit 505 can obtain information on home appliances (or IoT devices).

The viewing reservation management unit 507 can obtain viewing schedule information. The viewing schedule information can include one or more of the name of a broadcast program for which a user has reserved viewing and the broadcast program's broadcast time.

The information collection unit 509 can collect available information and transmit the collected available information to the information control unit 511.

The information control unit 511 can configure a standby screen based on the collected available information. The information control unit 511 can determine the output order of information boards based on the available information.

The information control unit 511 can determine the information board and background screen to be included in the standby screen based on available information.

The information control unit 511 can control the information board output unit 515 to output the information board based on available information.

The information control unit 511 can control the background screen output unit 513 to switch the background screen according to time zone.

The background screen output unit 513 can output the background screen included in the standby screen on the display 180.

The information board output unit 515 can output the information board included in the standby screen on the display 180. The information board and background screen can be displayed on different layers constituting the display 180.

The slide show control unit 517 may control the information board output unit 515 to sequentially output multiple information boards. The slide show control unit 517 may control the information board output unit 515 to output information boards according to the slide show interval.

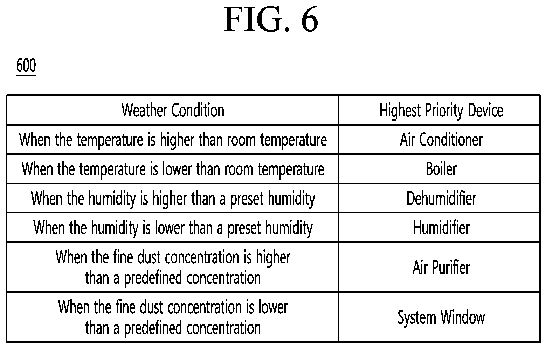

FIG. 6 is a diagram illustrating home appliances that are displayed with the highest priority on an event board based on weather information according to an embodiment of the present disclosure.

Referring to FIG. 6, a table 517 stored in the memory 140 is illustrated.

The table 517 may include weather conditions based on weather information and home appliances that are to be displayed with the highest priority on the event board 341 of FIG. 3 that match the weather conditions.

The controller 170 may display home appliances highly correlated with weather information on the event board 341 of FIG. 3 with the highest priority based on the table 517.

If the temperature is higher than room temperature, the controller 170 may display the status information of the air conditioner on the home appliance board 341b of the event board 341 with the highest priority. The status information of the air conditioner may include the operating status of the air conditioner. The status information of the air conditioner may further include a power button if the air conditioner is turned off, and a temperature control UI if the air conditioner is turned on.

If the temperature is lower than room temperature, the controller 170 may display the status information of the boiler on the home appliance board 341b of the event board 341 with the highest priority. The status information of the boiler may include the operating status of the boiler. The status information of the boiler may further include a power button if the boiler is turned off, and a temperature control UI if the boiler is turned on.

If the humidity is higher than the preset humidity, the controller 170 may present the status information of the dehumidifier to the home appliance board 341b of the event board 341 with the highest priority. The status information of the dehumidifier may include the operating status of the dehumidifier. The status information of the dehumidifier may further include a power button when the dehumidifier is turned off, and a humidity control UI when the dehumidifier is turned on.

If the humidity is lower than the preset humidity, the controller 170 may present the status information of the humidifier to the home appliance board 341b of the event board 341 with the highest priority. The status information of the humidifier may include the operating status of the humidifier. The status information of the humidifier may further include a power button when the humidifier is turned off, and a humidity control UI when the humidifier is turned on.

If the concentration of fine dust is higher than a preset concentration, the controller 170 may display the status information of the air purifier as a top priority to the home appliance board 341b of the event board 341. The status information of the air purifier may include the operating status of the air purifier. The status information of the air purifier may further include a power button if the air purifier is turned off, and a cleaning intensity control UI if the air purifier is turned on.

If the concentration of fine dust is lower than a preset concentration, the controller 170 may display the status information of the system window as a top priority to the home appliance board 341b of the event board 341.

According to one embodiment of the present invention, the above-described method may be implemented as processor-readable code on a medium having a program recorded thereon. Examples of processor-readable media include ROM, RAM, CD-ROM, magnetic tape, floppy disk, and optical data storage devices.

The display device described above is not limited to the configurations and methods of the embodiments described above. Rather, the embodiments may be configured by selectively combining all or part of the embodiments to allow for various modifications.

### [Industrial Applicability]

The present disclosure applies a motion effect to a background screen to prevent afterimages in an organic light-emitting diode display device, sequentially displaying various types of information or sequentially providing various information in standby mode. This prevents afterimages in an organic light-emitting diode display device while simultaneously providing useful information to the user. Therefore, the present disclosure can be applied to various display devices and systems, and thus has industrial applicability.

## Claims

1. A display device comprising:
a display; and
a controller configured to determine whether a power mode of the display device is a standby mode, and, when the power mode is the standby mode, to sequentially display, on the display in a slide show form, a plurality of information boards including different types of information.

2. The display device according to claim 1, wherein the plurality of information boards include:
a weather board including weather information,
a sports board including game information of a sports team preferred by a user,
an event board including viewing schedule information and information of home appliances, and
a composite board including the weather information, the game information, the viewing schedule information, and the information of home appliances.

3. The display device according to claim 2, wherein the controller is configured to determine, while displaying any one of the plurality of information boards, whether a slide show period of the information board being displayed has expired, and
when the slide show period has not expired, update a background screen that is displayed to overlap with the information board being displayed.

4. The display device according to claim 3, wherein the controller is configured to update the background screen according to a time period.

5. The display device according to claim 2, wherein the controller is configured to
acquire available information including the weather information, the game information, the viewing schedule information, and the information of home appliances, and
determine an output order of the plurality of information boards based on the acquired available information.

6. The display device according to claim 5, wherein the controller is configured to determine the output order of the plurality of information boards based on an update time of information.

7. The display device according to claim 2, wherein the controller is configured to display, on a home appliance board, state information of a home appliance matching a weather condition based on the weather information.

8. The display device according to claim 1, wherein the display includes an organic light emitting diode display.

9. A method of operating a display device, comprising:
determining whether a power mode of the display device is a standby mode; and
when the power mode is the standby mode, sequentially displaying, in a slide show form, a plurality of information boards including different types of information.

10. The method of operating a display device according to claim 9, wherein the plurality of information boards includes a weather board including weather information, a sports board including game information of a sports team preferred by a user, an event board including viewing schedule information and information of home appliances, and a composite board including the weather information, the game information, the viewing schedule information, and the information of home appliances.

11. The method of operating a display device according to claim 10, further comprising:
determining, while displaying any one of the plurality of information boards, whether a slide show period of the information board being displayed has expired; and
when the slide show period has not expired, updating a background screen that is displayed to overlap with the information board being displayed.

12. The method of operating a display device according to claim 11, wherein the updating comprises updating the background screen according to a time period.

13. The method of operating a display device according to claim 10, further comprising:
acquiring available information including the weather information, the game information, the viewing schedule information, and the information of home appliances; and
determining an output order of the plurality of information boards based on the acquired available information.

14. The method of operating a display device according to claim 13, wherein the determining comprises determining the output order of the plurality of information boards based on an update time of information.

15. The method of operating a display device according to claim 10, further comprising:
displaying, on a home appliance board, state information of a home appliance matching a weather condition based on the weather information.
